# EUROPÄISCHE PATENTANMELDUNG

(11) **EP 2 592 100 A1**
(43) Veröffentlichungstag der Anmeldung: **15.05.2013**
(21) Anmeldenummer: 11188692.5
(22) Anmeldetag: 10.11.2011
(51) Int. Cl.: C08G 59/50, C08L 63/00, C09D 163/00

(54) **HÄRTER FÜR EPOXIDHARZ-BESCHICHTUNGEN**

(71) Anmelder: Sika Technology AG, 6340 Baar (CH)
(72) Erfinder: Kasemi, Edis, 8046 Zürich (CH); Kramer, Andreas, 8006 Zürich (CH); Stadelmann, Ursula, 8046 Zürich (CH); Burckhardt, Urs, 8049 Zürich (CH)
(74) Vertreter: Sika Patent Attorneys

(57) **Zusammenfassung**

Die vorliegende Erfindung betrifft Härter für Epoxidharze enthaltend ein alkyliertes Polyethylenimin. Diese Härter weisen eine hohe Funktionalität und einen hohen Gehalt an sekundären Aminogruppen auf. Sie härten zusammen mit Epoxidharzen auch bei feucht-kalten Bedingungen überraschend schnell und ohne Blushing-Effekte zu Filmen mit sehr hoher Vernetzungsdichte. Sie sind insbesondere geeignet für Beschichtungen mit hohen Anforderungen an die Beständigkeit.

## Beschreibung

### Technisches Gebiet

Die Erfindung betrifft das Gebiet der Amine als Härter für Epoxidharze, sowie Amine enthaltende Epoxidharz-Zusammensetzungen und ihre Verwendung, insbesondere als Beschichtung.

### Stand der Technik

Epoxidharz-Zusammensetzungen sollen eine Reihe von Eigenschaften aufweisen, um als Beschichtung von hoher Qualität verwendbar zu sein. Einerseits sollen sie eine niedrige Viskosität aufweisen, damit sie bei Umgebungstemperatur gut verarbeitbar und selbstverlaufend sind, und sie sollen ohne sogenannte Blushing-Effekte schnell aushärten, auch bei feucht-kalten Bedingungen. Als "Blushing" werden Mängel bei der Aushärtung wie Trübungen, Flecken und raue oder klebrige Oberfläche bezeichnet, verursacht durch Salzbildung von Aminen mit Kohlendioxid (CO₂) aus der Luft, wobei eine hohe Luftfeuchtigkeit und tiefe Temperaturen das Auftreten von Blushing-Effekten begünstigen. Im ausgehärteten Zustand soll die Epoxidharz-Beschichtung eine ebenmässige Oberfläche ohne Trübungen, Flecken oder Krater aufweisen, und sie soll eine hohe Härte und gute Beständigkeit besitzen. Für Anwendungen, bei welchen sehr hohe Beständigkeiten gefordert sind, beispielsweise im Korrosionsschutz, besteht ein Bedarf nach Härtern mit hohen Funktionalitäten, um stark vernetzte Beschichtungen zu erhalten.

Aus dem Stand der Technik bekannte Härter mit hohen Funktionalitäten sind beispielsweise Polyalkylenamine wie TETA, TEPA oder PEHA. Unmodifiziert neigen sie aber zu sehr starken Blushing-Effekten und in der Form von Addukten sind ihre Viskositäten sehr hoch und ihre Neigung zu Blushing ist zwar weniger stark, aber immer noch vorhanden.

Weiterhin gibt es sogenannte Polyethylenimine. Dabei handelt es sich um verzweigte Polymere von Ethylenimin, welche primäre, sekundäre und tertiäre Aminogruppen aufweisen und hauptsächlich zur Wasseraufbereitung und in der Papierindustrie verwendet werden.

US 6'077'886 beschreibt Epoxidharz-Zusammensetzungen enthaltend ein Polyethylenimin und ein weiteres Amin, wobei diese Zusammensetzungen nach dem Vermischen eine hohe Standfestigkeit aufweisen. Für flächige Anwendungen sind diese Zusammensetzungen aufgrund der hohen Standfestigkeit und aufgrund von Blushing-Effekten nicht verwendbar.

### Darstellung der Erfindung

Aufgabe der vorliegenden Erfindung ist es daher, einen Härter für Epoxidharze zur Verfügung zu stellen, der eine hohe Funktionalität aufweist, bei Raumtemperatur flüssig und nicht zu hochviskos ist und zusammen mit Epoxidharzen schnell und ohne Blushing-Effekte zu Beschichtungen von hoher Härte und Beständigkeit aushärten kann.

Überraschenderweise wurde gefunden, dass Härter nach Anspruch 1 enthaltend mindestens ein Amin der Formel (I) diese Aufgabe lösen. Die Härter nach Anspruch 1 sind geruchsarm, mit Epoxidharzen gut verträglich und härten auch bei feucht-kalten Bedingungen schnell aus, wobei Filme entstehen, die nicht klebrig sind, einen hohen Glanz aufweisen, frei sind von Trübungen und Oberflächenstörungen und über sehr hohe Vernetzungsdichten und Beständigkeiten verfügen. Besonders überraschend ist dabei der Umstand, dass die Amine der Formel (I) auch dann eine ausgezeichnete Reaktivität bei feucht-kalten Bedingungen aufweisen, wenn sie keine primären Aminogruppen tragen. Die Härter nach Anspruch 1 lassen sich in einem einfachen Verfahren herstellen. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Härter, geeignet zum Aushärten von Epoxidharzen, enthaltend mindestens ein Amin der Formel (I), 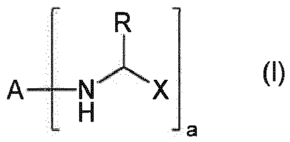 wobei

A für den Rest eines Polyethylenimins mit einem Molekulargewicht im Bereich von 300 bis 5'000 g/mol, bevorzugt 300 bis 2'000 g/mol, besonders bevorzugt 300 bis 1'000 g/mol, nach Entfernung von a primären aliphatischen Aminogruppen steht;
R für ein Wasserstoffatom oder eine Alkylgruppe mit 1 bis 12 C-Atomen steht, bevorzugt für ein Wasserstoffatom oder eine Methylgruppe, insbesondere für ein Wasserstoffatom;
a für eine ganze Zahl von 1 bis 50 steht, bevorzugt für 1 bis 20, besonders bevorzugt für 1 bis 10, insbesondere für 3 bis 10; und
X für einen Kohlenwasserstoffrest mit 1 bis 20 C-Atomen, welcher gegebenenfalls Hydroxylgruppen, Mercaptogruppen, Ethergruppen, Estergruppen, Pyridinogruppen oder Aminogruppen aufweist, steht.

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.

Als "aliphatisch" wird ein Amin bezeichnet, dessen Aminogruppe an einen aliphatischen, cycloaliphatischen oder arylaliphatischen Rest gebunden ist; entsprechend wird diese Gruppe als aliphatische Aminogruppe bezeichnet. Als "aromatisch" wird ein Amin bezeichnet, dessen Aminogruppe an einen aromatischen Rest gebunden ist; entsprechend wird diese Gruppe als aromatische Aminogruppe bezeichnet.

Als "Aminwasserstoff" werden die Wasserstoffatome von primären und sekundären Aminogruppen bezeichnet.

Als "nicht einbaubarer Verdünner" wird eine in einem Epoxidharz lösliche und dessen Viskosität senkende Substanz bezeichnet, welche bei der Aushärtung des Epoxidharzes nicht kovalent in die Harzmatrix eingebaut wird.

Mit dem Begriff "Viskosität" wird im vorliegenden Dokument die dynamische Viskosität oder Scherviskosität bezeichnet, welche durch das Verhältnis zwischen der Schubspannung und der Scherrate (Geschwindigkeitsgefälle) definiert ist und in Ahnlehnung an DIN EN ISO 3219 beschrieben bestimmt wird. Bevorzugt ist das Amin der Formel (I) frei von primären Aminogruppen. Solche Amine der Formel (I) härten mit Epoxidharzen auch bei tiefen Temperaturen und hoher Feuchtigkeit ohne störende Blushing-Effekte aus.

Bevorzugt steht X für einen Arylrest mit 6-12 C-Atomen, insbesondere für einen Rest ausgewählt aus der Gruppe bestehend aus Phenyl, Methylphenyl, Dimethylphenyl, Trimethylphenyl, Ethylphenyl, Isopropylphenyl und Naphthyl. Diese Amine weisen besonders niedrige Viskositäten auf und sind zudem besonders gut verträglich mit Epoxidharzen, wodurch damit ausgehärtete Filme eine besonderes hohe Qualität aufweisen.

Weiterhin bevorzugt steht X für einen hydroxylsubstituierten Arylrest mit 6-12 C-Atomen, insbesondere für einen Rest ausgewählt aus der Gruppe bestehend aus 2-Hydroxyphenyl, 3-Hydroxyphenyl und 4-Hydroxyphenyl. Diese Amine weisen mit Epoxidharzen eine besonders rasche Aushärtung auf, insbesondere bei tiefen Temperaturen. Aufgrund der niedrigeren Viskosität ist davon 2-Hydroxyphenyl besonders bevorzugt.

Weiterhin bevorzugt steht X für einen aminosubstituierten Arylrest mit 6-12 C-Atomen, insbesondere für einen Rest ausgewählt aus der Gruppe bestehend aus 2-Aminophenyl, 3-Aminophenyl und 4-Aminophenyl. Diese Amine weisen eine besonders hohe Funktionalität gegenüber Epoxidharzen auf und sind besonders hydrophob.

Weiterhin bevorzugt steht X für einen dialkylaminosubstituierten Arylrest mit 6-12 C-Atomen, insbesondere für einen Rest ausgewählt aus der Gruppe bestehend aus 2-Dimethylaminophenyl, 3-Dimethylaminophenyl und 4-Dimethylaminophenyl. Diese Amine weisen mit Epoxidharzen eine besonders rasche Aushärtung auf.

Weiterhin bevorzugt steht X für einen Heteroarylrest mit 5-12 C-Atomen, insbesondere für einen Rest ausgewählt aus der Gruppe bestehend aus 2-Pyridinyl, 3-Pyridinyl und 4-Pyridinyl. Diese Amine weisen mit Epoxidharzen eine besonders rasche Aushärtung auf, insbesondere bei tiefen Temperaturen.

Weiterhin bevorzugt steht X für einen Alkyl- oder Cycloalkylrest mit 1 bis 12 C-Atomen, insbesondere für einen Rest ausgewählt aus der Gruppe bestehend aus Methyl, Ethyl, 1-Propyl, 2-Propyl, 1-Butyl, 2-Butyl, Isobutyl, 2-Pentyl, 3-Pentyl, 3-Heptyl, 1-Undecyl und Cyclohexyl. Diese Amine weisen besonders niedrige Viskositäten auf.

Weiterhin bevorzugt steht X für einen Rest der Formel (II), 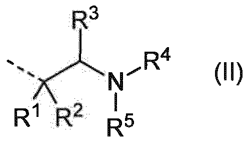 wobei
R¹ und R² entweder
   unabhängig voneinander jeweils für einen einwertigen Kohlenwasserstoffrest mit 1 bis 12 C-Atomen stehen,
   oder zusammen für einen zweiwertigen Kohlenwasserstoffrest mit 4 bis 12 C-Atomen, der Teil eines, gegebenenfalls substituierten, carbocyclischen
   Rings mit 5 bis 8, bevorzugt 6, C-Atomen ist, stehen;
R³ für Wasserstoff oder eine Alkylgruppe oder eine Arylalkylgruppe oder eine Alkoxycarbonylgruppe mit 1 bis 12 C-Atomen, bevorzugt für ein Wasserstoffatom, steht;
   und entweder
R⁴ für einen einwertigen aliphatischen, cycloaliphatischen oder arylaliphatischen Rest mit 1 bis 16 C-Atomen, welcher gegebenenfalls Heteroatome enthält, steht, und
R⁵ für Wasserstoff oder für einen einwertigen aliphatischen, cycloaliphatischen oder arylaliphatischen Rest mit 1 bis 16 C-Atomen, welcher gegebenenfalls Heteroatome enthält, steht,
   oder
R⁴ und R⁵ zusammen für einen zweiwertigen aliphatischen Rest mit 3 bis 16 C-Atomen, der Teil eines, gegebenenfalls substituierten, heterocyclischen Rings mit 5 bis 8, bevorzugt 6, Ringatomen ist, wobei dieser Ring neben dem Stickstoffatom gegebenenfalls weitere Heteroatome enthält, stehen.

Bevorzugt stehen R¹ und R² jeweils für eine Methylgruppe.

Bevorzugt bilden R⁴ und R⁵ unter Einbezug des Stickstoffatoms einen, gegebenenfalls substituierten, Morpholinring.

Weiterhin bevorzugt stehen R⁴ für Methyl, Ethyl, Propyl, Isopropyl, Butyl, 2-Ethylhexyl, Cyclohexyl, 2-Hydroxyethyl, 2-Methoxyethyl, 2-Hydroxypropyl oder Benzyl; und R⁵ für ein Wasserstoffatom oder für Methyl, Ethyl, Propyl, Isopropyl, Butyl, 2-Ethylhexyl, Cyclohexyl, 2-Hydroxyethyl, 2-Methoxyethyl, 2-Hydroxypropyl oder Benzyl.

Diese Amine sind sind gut verträglich mit Epoxidharzen, insbesondere wenn sie Morpholinogruppen enthalten.

Weiterhin bevorzugt steht X für einen Rest der Formel (III), 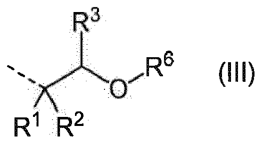 wobei
R¹, R² und R³ die in Formel (II) genannten Bedeutungen aufweisen und R⁶ für Wasserstoff oder für einen Alkyl- oder Acylrest mit 1 bis 20 C-Atomen steht, insbesondere für Wasserstoff oder für einen Acylrest mit 1 bis 12 C-Atomen, besonders bevorzugt für Wasserstoff oder Dodecanoyl. Mit Dodecanoyl als R⁶ sind besonders niedrigviskose Amine zugänglich.

Besonders bevorzugt steht X für einen Rest ausgewählt aus der Gruppe bestehend aus Phenyl, 2-Hydroxyphenyl, 3-Aminophenyl, 4-Dimethylaminophenyl, 2-Pyridinyl, 3-Pyridinyl, Methyl, Ethyl, 2-Propyl, 3-Heptyl, 1-Undecyl, 2,2-Dimethyl-3-(N-morpholino)propyl, 2,2-Dimethyl-3-hydroxypropyl und 2,2-Dimethyl-3-lauroyloxypropyl, am meisten bevorzugt für Phenyl.

Mit Phenyl, Methyl, Ethyl, 2-Propyl, 3-Heptyl, 1-Undecyl und 2,2-Dimethyl-3-lauroyloxypropyl als Rest X weist das Amin der Formel (I) besonders niedrige Viskositäten auf, und mit Phenyl als Rest X zudem eine besonders gute Verträglichkeit mit Epoxidharzen.

Weiterhin besonders bevorzugt steht X für eine Kombination verschiedener der als bevorzugt genannten Reste, insbesondere für eine Kombination von Phenyl und mindestens einem weiteren der als bevorzugt genannten Reste. Dabei weist das Verhältnis zwischen Phenyl und der Summe der weiteren als bevorzugt genannten Reste bevorzugt einen Wert von 1 bis 20, insbesondere von 2 bis 10, auf.

Bevorzugt steht X für eine Kombination von Phenyl mit einem oder mehreren Resten ausgewählt aus der Gruppe bestehend aus 2-Hydroxyphenyl, 3-Aminophenyl, 4-Dimethylaminophenyl, 2-Pyridinyl, 3-Pyridinyl, 2,2-Dimethyl-3-(N-morpholino)propyl und 2,2-Dimethyl-3-lauroyloxypropyl. Mit solchen Kombinationen können Eigenschaften wie Viskosität, Verträglichkeit und Aushärtungsgeschwindigkeit des Härters mit Epoxidharzen beeinflusst und optimiert werden.

Bevorzugt weist das Amin der Formel (I) eine Viskosität, gemessen bei 20 °C, im Bereich von 150 bis 50'000 mPa·s, besonders bevorzugt im Bereich von 150 bis 30'000 mPa·s, und insbesondere im Bereich von 150 bis 20'000 mPa·s, auf.

Weiterhin betrifft die vorliegende Erfindung ein Verfahren zur Herstellung eines Härters wie er vorhergehend beschrieben worden ist, wobei das Amin der Formel (I) durch reduktive Alkylierung eines Polyethylenimins mit einer Carbonylverbindung der Formel (IV) oder (IV') erhalten wird.

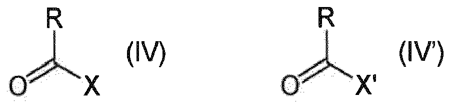

In den Formeln (IV) und (IV') weisen R und X die bereits genannten Bedeutungen auf und X' steht für einen nitrosubstituierten Arylrest mit 6-12 C-Atomen.

Als Carbonylverbindung der Formel (IV) oder (IV') geeignet sind Aldehyde oder Ketone, insbesondere
- Benzaldehyd, die isomeren Tolualdehyde, die isomeren Dimethylbenzaldehyde, die isomeren Trimethylbenzaldehyde, die isomeren Ethylbenzaldehyde, die isomeren Isopropylbenzaldehyde, die isomeren Naphthaldehyde, Acetophenon, 4'-Methylacetophenon, Propiophenon und 4'-Methylpropiophenon;
- Salicylaldehyd, 3-Hydroxybenzaldehyd, 4-Hydroxybenzaldehyd, 2'-Hydroxyacetophenon, 3'-Hydroxyacetophenon und 4'-Hydroxyacetophenon;
- 2-Nitrobenzaldehyd, 3-Nitrobenzaldehyd, 4-Nitrobenzaldehyd, 2'-Nitroacetophenon, 3'-Nitroacetophenon und 4'-Nitroacetophenon;
- 2-Dimethylaminobenzaldehyd, 3-Dimethylaminobenzaldehyd, 4-Dimethylaminobenzaldehyd und 4'-Dimethylaminoacetophenon;
- 2-Pyridincarbaldehyd, 3-Pyridincarbaldehyd, 4-Pyridincarbaldehyd, 2-Acetylpyridin, 3-Acetylpyridin und 4-Acetylpyridin;
- Butanal, Isobutanal, Pentanal, 2-Methylbutanal, 3-Methylbutanal, 2-Methylpentanal, 2-Ethylbutanal, 2-Ethylhexanal, Dodecanal, Cyclohexanal, Aceton, Methylethylketon, Methylisopropylketon, Methylisobutylketon und 3-Methyl-pentan-2-on;
- 2,2-Dimethyl-3-(N-morpholino)propanal, 2,2-Dimethyl-3-(N-(2,6-dimethyl)-morpholino)propanal, 2,2-Dimethyl-3-methylaminopropanal, 2,2-Dimethyl-3-dimethylaminopropanal, 2,2-Dimethyl-3-bis(2-methoxyethyl)aminopropanal, 2,2-Dimethyl-3-benzylaminopropanal und 2,2-Dimethyl-3-(N-benzylmethyl-amino)propanal;
- 2,2-Dimethyl-3-hydroxypropanal, 2,2-Dimethyl-3-methoxypropanal, 2,2-Dimethyl-3-ethoxypropanal, 2,2-Dimethyl-3-propoxypropanal, 3-Acetoxy-2,2-dimethylpropanal, 2,2-Dimethyl-3-lauroyloxypropanal und 3-Benzoyloxy-2,2-dimethylpropanal.

Besonders bevorzugt als Carbonylverbindung der Formel (IV) oder (IV') sind Benzaldehyd, Salicylaldehyd, 3-Nitrobenzaldehyd, 4-Dimethylaminobenzaldehyd, 2-Pyridincarbaldehyd, 3-Pyridincarbaldehyd, 2,2-Dimethyl-3-(N-morpholi-no)propanal, 2,2-Dimethyl-3-hydroxypropanal und 2,2-Dimethyl-3-lauroyloxy-propanal.

Weiterhin bevorzugt wird ein Amin der Formel (I) durch reduktive Alkylierung eines Polyethylenimins mit einer Mischung aus mehreren Carbonylverbindungen der Formel (IV) und/oder (IV') erhalten, insbesondere mit Mischungen enthaltend Benzaldehyd.

Bei der reduktiven Alkylierung wird die Carbonylverbindung der Formel oder (IV') oder die Mischung aus mehreren Carbonylverbindungen der Formel (IV) oder (IV') in Bezug auf die primären Aminogruppen des Polyethylenimins bevorzugt stöchiometrisch eingesetzt, wobei Amine der Formel (I) erhalten werden, die frei sind von primären Aminogruppen.

Die reduktive Alkylierung wird geeigneterweise in Anwesenheit von Wasserstoff und unter erhöhtem Druck durchgeführt. Sie kann direkt mit molekularem Wasserstoff oder indirekt durch Wasserstoff-Transfer von anderen Reagentien erfolgen. Bevorzugt wird molekularer Wasserstoff verwendet. Dabei werden primäre aliphatische Aminogruppen reduktiv alkyliert. Gegebenenfalls vorhandene Nitrophenylgruppen werden ebenfalls reduziert beziehungsweise hydriert, wobei primäre aromatischen Aminogruppen entstehen. Die Bedingungen werden vorteilhaft so gewählt, dass einerseits die primären aliphatischen Aminogruppen und gegebenenfalls vorhandene Nitrophenylgruppen möglichst vollständig umgesetzt und andererseits möglichst keine anderen Bestandteile des Amins und der Carbonylverbindung hydriert oder zersetzt werden. Bevorzugt wird bei einem Wasserstoff-Druck von 5 bis 100 bar, einer Temperatur von 40 bis 120°C und in Anwesenheit eines geeigneten Katalysators gearbeitet. Als Katalysatoren bevorzugt sind Palladium auf Kohle (Pd/C), Platin auf Kohle (Pt/C), Adams-Katalysator und Raney-Nickel, insbesondere Palladium auf Kohle und Platin auf Kohle. Gegebenenfalls vorhandene Pyridinylgruppen werden unter den vorgenannten Bedingungen nicht hydriert.

Geeignete Polyethylenimine für die reduktive Alkylierung zur Erhaltung des Amins der Formel (I) sind Produkte aus der Polymerisation von Ethylenimin, wobei verzweigte polymere Strukturen enthaltend primäre, sekundäre und tertiäre Aminogruppen entstehen, wie untenstehend anhand eines einzelnen Moleküls beispielhaft dargestellt. Es handelt sich dabei um Mischungen verschiedener Moleküle mit Molekulargewichtsverteilungen, wie sie typischerweise bei Polymerisationen entstehen.

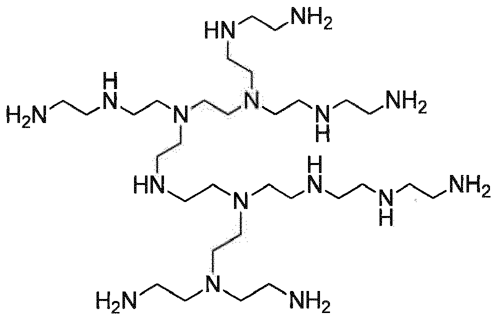

Geeignete Polyethylenimine sind durch bekannte Prozesse herstellbar, oder sie sind kommerziell erhältlich, insbesondere als Lupasol^{®} FG und Lupasol^{®} G 20 wasserfrei (von BASF) sowie als Epomin^{®} SP-003, Epomin^{®} SP-006, Epomin^{®} SP-012 und Epomin^{®} SP-018 (von Nippon Shokubai).

Die Herstellung des Amins der Formel (I) durch reduktive Alkylierung auf die beschriebene Weise ist für die Verwendung als Härter für Epoxidharze besonders vorteilhaft, da sehr selektiv primäre Aminogruppen alkyliert werden, während sekundäre Aminogruppen kaum weiter alkyliert werden. Die Produkte aus der beschriebenen Herstellung sind bei einem stöchiometrischen Einsatz der Carbonylverbindung der Formel (IV) oder (IV') frei von primären Aminogruppen und weisen einen hohen Gehalt an sekundären Aminogruppen auf. Dadurch sind sie ohne weitere Aufbereitung zur Aushärtung von Epoxidharzen in der beschriebenen Weise verwendbar.

Amine der Formel (I) lassen sich auch auf andere Weise als durch reduktive Alkylierung erhalten, insbesondere durch Umsetzung von Polyethyleniminen mit entsprechenden Chloriden oder Bromiden in einem geeigneten Verhältnis. Dabei entstehen aber Reaktionsgemische, welche typischerweise einen erheblichen Anteil an doppelt alkylierten Aminogruppen aufweisen.

Ein weiterer Gegenstand der Erfindung ist die Verwendung des beschriebenen Härters zum Aushärten von mindestens einem Epoxidharz. Dazu wird der Härter mit dem Epoxidharz auf eine geeignete Weise vermischt.

Der beschriebene Härter weist besonders vorteilhafte Eigenschaften auf. Er ist bei Raumtemperatur flüssig bei moderater Viskosität, wenig flüchtig und geruchsarm und weist eine so geringe Reaktivität gegenüber CO₂ auf, dass er - im Gegensatz zu vielen aus dem Stand der Technik bekannten Härtern - an der Luft weder zur Bildung von Krusten noch zu Ausfällungen oder Viskositätserhöhungen neigt. Seine Funktionalität gegenüber Epoxidgruppen ist hoch, auch wenn das Amin der Formel (I) keine primären Aminogruppen aufweist, wodurch sehr hohe Vernetzungsdichten erreicht werden. Der Härter ist mit den üblichen kommerziellen Epoxidharzen gut verträglich und verarbeitbar und härtet bei Umgebungstemperatur überraschend schnell und ohne störende Blushing-Effekte zu ausgehärteten Zusammensetzungen von hoher Härte und sehr hoher Beständigkeit aus.

Der beschriebene Härter kann neben dem Amin der Formel (I) weitere, zur Aushärtung von Epoxidharzen geeignete Verbindungen enthalten, insbesondere die Folgenden:
- Monoamine, wie insbesondere Benzylamin, Cyclohexylamin, 2-Phenylethylamin, 2-Methoxyphenylethylamin, 4-Methoxyphenylethylamin, 3,4-Dimethoxyphenylethylamin (Homoveratrylamin), Methylamin, Ethylamin, Propylamin, Isopropylamin, 1- und 2-Butylamin, Isobutylamin, tert.-Butylamin, 3-Methyl-2-butylamin, 1-Hexylamin, 1-Octylamin, 2-Ethyl-1-hexylamin, 2-Methoxy-1-ethylamin, 2-Ethoxy-1-ethylamin, 3-Methoxy-1-propylamin, 3-Ethoxy-1-propylamin, 3-(2-Ethylhexyloxy)propylamin, 3-(2-Methoxyethoxy)propylamin;
- sekundäre aliphatische Polyamine, wie insbesondere N,N'-Dibutyl-ethylendiamin, N,N'-Di-tert.butyl-ethylendiamin, N,N'-Diethyl-1,6-hexandiamin, 1-(1-Methylethyl-amino)-3-(1-methylethyl-aminomethyl)-3,5,5-trimethylcyclohexan (Jefflink^{®} 754 von Huntsman), N⁴-Cyclohexyl-2-methyl-N²-(2-methylpropyl)-2,4-pentandiamin, N,N'-Dialkyl-1,3-bis-(aminomethyl)benzol, insbesondere N,N'-Dibenzyl-1,3-bis-(aminomethyl)benzol, Bis-(4-(N-3-butylamino)-cyclohexyl)methan (Clearlink^{®} 1000 von UOP), dialkyliertes DETA oder TETA oder TEPA oder PEHA oder N3- oder N4-Amin, insbesondere die dibenzylierten, gegebenenfalls Phenolgruppen aufweisenden Typen, weiterhin styrolisierte Polyamine wie beispielsweise styrolisiertes 1,3-Bis-(aminomethyl)benzol, kommerziell erhältlich als Gaskamine^{®} 240 (von Mitsubishi Gas Chemical), N-alkylierte Polyetheramine, beispielsweise die Jeffamine^{®}-Typen SD-231, SD-401, ST-404 und SD-2001 (von Huntsman), sowie Produkte aus der Michael-artigen Additionsreaktion von primären aliphatischen Polyaminen mit Michaelakzeptoren wie Maleinsäurediestern, Fumarsäurediestern, Citraconsäurediestern, Acrylsäureestern, Methacrylsäureestern, Zimtsäureestern, Itaconsäurediestern, Vinylphosphonsäurediestern, Vinylsulfonsäurearylestern, Vinylsulfonen, Vinylnitrilen, Nitroalkylenen oder Knoevenagel-Kondensationsprodukten wie beispielsweise solchen aus Malonsäurediestern und Aldehyden wie Formaldehyd, Acetaldehyd oder Benzaldehyd;
- primäre und sekundäre Aminogruppen aufweisende Polyamine, wie insbesondere N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, N-(2-Aminoethyl)piperazin, N-Methyl-1,3-propandiamin, N-Butyl-1,3-propandiamin, N-(2-Ethylhexyl)-1,3-propandiamin, N-Cyclohexyl-1,3-propandiamin, 3-Methylamino-1-pentylamin, 3-Ethylamino-1-pentylamin, 3-Cyclohexylamino-1-pentylamin, Fettdiamine wie N-Cocoalkyl-1,3-propandiamin und Produkte aus der Michaelartigen Additionsreaktion von primären aliphatischen Diaminen mit Acrylnitril, Malein- oder Fumarsäurediestern, Citraconsäurediestern, Acryl- und Methacrylsäureestern, Acryl- und Methacrylsäureamiden und Itaconsäurediestern, umgesetzt im Molverhältnis 1:1;
- primäre und tertiäre Aminogruppen aufweisende Polyamine, wie insbesondere 3-(Dimethylamino)-1-propylamin;
- aliphatische, cycloaliphatische oder arylaliphatische primäre Diamine, wie insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5, 5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4), 8(9)-Bis-(aminomethyl)-tricyclo[5.2.1.0^{2,6}]decan, 1,4-Diamino-2,2,6-trimethylcyclohexan (TMCDA), 1,8-Menthandiamin, 3,9-Bis-(3-aminopropyl)-2,4,8,10-tetraoxaspiro[5.5]undecan sowie 1,3- und 1,4-Bis-(aminomethyl)benzol;
- aliphatische, cycloaliphatische oder arylaliphatische primäre Triamine wie 4-Aminomethyl-1,8-octandiamin, 1,3,5-Tris-(aminomethyl)benzol und 1,3,5-Tris-(aminomethyl)cyclohexan;
- Ethergruppen-haltige aliphatische primäre Diamine, wie insbesondere Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin und höhere Oligomere dieser Diamine, Bis-(3-aminopropyl)polytetrahydrofurane und andere Polytetrahydrofuran-diamine, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramine (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} D-4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramine D 230, Polyetheramine D 400 und Polyetheramine D 2000, PC Amine^{®} DA 250, PC Amine^{®} DA 400, PC Amine^{®} DA 650 und PC Amine^{®} DA 2000;
- primäre Polyoxyalkylen-Triamine, welche typischerweise Produkte aus der Aminierung von Polyoxyalkylen-Triolen darstellen und beispielsweise erhältlich sind unter dem Namen Jeffamine^{®} (von Huntsman), unter dem Namen Polyetheramine (von BASF) oder unter dem Namen PC Amine^{®} (von Nitroil), wie insbesondere Jeffamine^{®} T-403, Jeffamine^{®} T-3000, Jeffamine^{®} T-5000, Polyetheramine T 403, Polyetheramine T 5000 und PC Amine^{®} TA 403;
- tertiäre Aminogruppen aufweisende Polyamine mit zwei primären aliphatischen Aminogruppen, wie insbesondere N,N'-Bis-(aminopropyl)piperazin, N,N-Bis-(3-aminopropyl)methylamin, N,N-Bis-(3-aminopropyl)ethylamin, N,N-Bis-(3-aminopropyl)propylamin, N,N-Bis-(3-aminopropyl)cyclohexylamin, N,N-Bis-(3-aminopropyl)-2-ethyl-hexylamin, sowie die Produkte aus der doppelten Cyanoethylierung und nachfolgender Reduktion von Fettaminen, welche abgeleitet sind von natürlichen Fettsäuren, wie N,N-Bis-(3-aminopropyl)dodecylamin und N,N-Bis-(3-aminopropyl)talgalkylamin, erhältlich als Triameen^{®} Y12D und Triameen^{®} YT (von Akzo Nobel);
- tertiäre Aminogruppen aufweisende Polyamine mit drei primären aliphatischen Aminogruppen, wie insbesondere Tris-(2-aminoethyl)amin, Tris-(2-aminopropyl)amin und Tris-(3-aminopropyl)amin;
- sekundäre Aminogruppen aufweisende Polyamine mit zwei primären aliphatischen Aminogruppen, wie insbesondere 3-(2-Aminoethyl)aminopropylamin, Bis-hexamethylentriamin (BHMT), Diethylentriamin (DETA), Triethylentetramin (TETA), Tetraethylenpentamin (TEPA), Pentaethylenhexamin (PEHA) und höhere Homologe linearer Polyethylenamine wie Polyethylenpolyamin mit 5 bis 7 Ethylenamin-Einheiten (sogenanntes "higher ethylenepolyamine", HEPA), Produkte aus der Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis-(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin und N,N'-Bis-(3-amino-1-ethylpropyl)-2-methyl-1,5-pentandiamin;
- Aminoalkohole, wie insbesondere 3-Amino-1-propanol, 2-Amino-1-butanol, 6-Amino-1-hexanol, Aminopropyldiethanolamin (APDEA), 4-(2-Aminoethyl)-2-hydroxyethylbenzol, 3-Aminomethyl-3,5,5-trimethyl-cyclohexanol, 2-(2-Aminoethoxy)-ethanol, 2-(2-(2-Aminoethoxy)ethoxy)ethanol, 3-(2-Hydroxyethoxy)-propylamin und 3-(2-(2-Hydroxyethoxy)-ethoxy)-propylamin;
- Aminomercaptane, wie insbesondere 2-Aminoethanthiol (Cysteamin), 3-Aminopropanthiol, 4-Amino-1-butanthiol und 6-Amino-1-hexanthiol.
- aromatische Polyamine, wie insbesondere m- und p-Phenylendiamin, 4,4'-, 2,4'- und 2,2'-Diaminodiphenylmethan, 3,3'-Dichloro-4,4'-diaminodiphenylmethan (MOCA), 2,4- und 2,6-Toluylendiamin, Mischungen von 3,5-Dimethylthio-2,4- und -2,6-toluylendiamin (erhältlich als Ethacure^{®} 300 von Albemarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-5,5'-methylendianthranilat, 1,3-Propylen-bis-(4-aminobenzoat), 1,4-Butylen-bis-(4-aminobenzoat), Polytetramethylenoxid-bis-(4-aminobenzoat) (erhältlich als Versalink^{®} von Air Products), 1,2-Bis-(2-aminophenylthio)-ethan, 2-Methylpropyl-(4-chloro-3,5-diaminobenzoat) und tert.Butyl-(4-chloro-3,5-diaminobenzoat);
- Amin/Epoxid-Addukte, insbesondere Addukte aus den genannten Aminen mit Diepoxiden im Molverhältnis von mindestens 2/1, insbesondere im Molverhältnis von 2/1 bis 6/1, oder mit Monoepoxiden im Molverhältnis von mindestens 1/1, sowie Umsetzungsprodukte aus Aminen und Epichlorhydrin, insbesondere jenes von 1,3-Bis-(aminomethyl)benzol, kommerziell erhältlich als Gaskamine^{®} 328 (von Mitsubishi Gas Chemical);
- Polyamidoamine, welche Umsetzungsprodukte aus einer ein- oder mehrwertigen Carbonsäure, beziehungsweise deren Ester oder Anhydride, insbesondere einer Dimerfettsäure, und einem im stöchiometrischen Überschuss eingesetzten aliphatischen, cycloaliphatischen oder aromatischen Polyamin, insbesondere einem Polyalkylenamin wie beispielsweise DETA oder TETA, darstellen, insbesondere die kommerziell erhältlichen Polyamidoamine Versamid^{®} 100, 125, 140 und 150 (von Cognis), Aradur^{®} 223, 250 und 848 (von Huntsman), Euretek^{®} 3607 und 530 (von Huntsman) und Beckopox^{®} EH 651, EH 654, EH 655, EH 661 und EH 663 (von Cytec);
- Mannich-Basen, teilweise auch Phenalkamine genannt, welche Umsetzungsprodukte einer Mannich-Reaktion von Phenolen, insbesondere Cardanol, Nonylphenol oder tert.Butylphenol, mit Aldehyden, insbesondere Formaldehyd, und Polyaminen darstellen, insbesondere die kommerziell erhältlichen Mannich-Basen Cardolite^{®} NC-541, NC-557, NC-558, NC-566, Lite 2001 und Lite 2002 (von Cardolite), Aradur^{®} 3440, 3441, 3442 und 3460 (von Huntsman), Accelerator 2950 (von Huntsman) und Beckopox^{®} EH 614, EH 621, EH 624, EH 628 und EH 629 (von Cytec);
- flüssige Mercaptan-terminierte Polysulfid-Polymere, bekannt unter dem Markennamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 und LP-2; sowie weiterhin bekannt unter dem Markennamen Thioplast^{®} (von Akzo Nobel), insbesondere die Typen G 10, G 112, G 131, G 1, G 12, G 21, G 22, G 44 und G 4;
- Mercaptan-terminierte Polyoxyalkylen-Ether, erhältlich beispielsweise durch Umsetzung von Polyoxyalkylendi- und -triolen entweder mit Epichlorhydrin oder mit einem Alkylenoxid, gefolgt von Natriumhydrogensulfid;
- Mercaptan-terminierte Verbindungen in Form von Polyoxyalkylen-Derivaten, bekannt unter dem Markennamen Capcure^{®} (von Cognis), insbesondere die Typen WR-8, LOF und 3-800;
- Polyester von Thiocarbonsäuren, beispielsweise Pentaerythritoltetramercaptoacetat, Trimethylolpropantrimercaptoacetat, Glykoldimercaptoacetat, Pentaerythritoltetra-(3-mercaptopropionat), Trimethylolpropantri-(3-mercaptopropionat) und Glykoldi-(3-mercaptopropionat), sowie die Veresterungsprodukte von Polyoxyalkylendiolen und -triolen, ethoxyliertem Trimethylolpropan und Polyester-Diolen mit Thiocarbonsäuren wie Thioglykolsäure und 2- oder 3-Mercaptopropionsäure;
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) und Ethandithiol.

Davon bevorzugt sind DAMP, MPMD, C11-Neodiamin, 1,6-Hexandiamin, 2,5-Dimethyl-1,6-hexandiamin, TMD, 1,12-Dodecandiamin, 1,4-Diaminocyclohexan, Bis-(4-aminocyclohexyl)methan, Bis-(4-amino-3-methylcyclohexyl)methan, IPDA, 3(4),8(9)-Bis-(aminomethyl)-tricylo[5.2.1.0^{2,6}]decan, 1,3-Bis-(aminomethyl)benzol, N,N'-Dibenzyl-1,3-bis-(aminomethyl)benzol, 1,3-Bis-(aminomethyl)cyclohexan, styrolisiertes 1,3-Bis-(aminomethyl)benzol, insbesondere Gaskamine^{®} 240, NBDA, dibenzyliertes DETA, dibenzyliertes TETA, dibenzyliertes N3-Amin und dibenzyliertes N4-Amin, wobei diese dibenzylierten Amine gegebenenfalls Phenolgruppen aufweisen, Polyoxyalkylen-Diamine und -Triamine mit einem Molekulargewicht im Bereich von 200 bis 500 g/mol, insbesondere die Typen Jeffamine^{®} D-230, Jeffamine^{®} D-400 und Jeffamine^{®} T-403.

In einer bevorzugten Ausführungsform enthält der Härter neben dem Amin der Formel (I) mindestens ein weiteres Amin mit mindestens zwei gegenüber Epoxidgruppen reaktiven Aminwasserstoffen. Bevorzugt weist ein solches weiteres Amin eine niedrigere Viskosität auf als das Amin der Formel (I).

Besonders bevorzugt ist das weitere Amin ausgewählt aus der Gruppe bestehend aus N,N'-Dibenzyl-1,3-bis-(aminomethyl)benzol, styrolisiertes 1,3-Bis-(aminomethyl)benzol, insbesondere Gaskamine^{®} 240, dibenzyliertes DETA, dibenzyliertes TETA, dibenzyliertes N3-Amin, dibenzyliertes N4-Amin und Polyoxyalkylen-Diamin mit einem mittleren Molekulargewicht von ca. 240 g/mol, insbesondere Jeffamine^{®} D-230. Diese weiteren Amine erniedrigen die Viskosität des Härters, ohne dass dem Härter ein nicht einbaubarer Verdünner zugesetzt wird.

Davon bevorzugt sind N,N'-Dibenzyl-1,3-bis-(aminomethyl)benzol und Gaskamine^{®} 240. Mit diesen weist der Härter besonders niedrige Viskositäten und eine schnelle Aushärtung auf, insbesondere auch bei tiefen Temperaturen, wobei Beschichtungen von sehr hoher Härte und ausgezeichneter optischer Qualität erhalten werden.

Der erfindungsgemässe Härter kann weiterhin mindestens einen Beschleuniger enthalten. Als Beschleuniger geeignet sind Substanzen, welche die Reaktion zwischen Aminogruppen und Epoxidgruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; weiterhin tertiäre Amine wie insbesondere 1,4-Diazabicyclo[2.2.2]octan, Benzyldimethylamin, α-Methylbenzyldimethylamin, Triethanolamin, Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]undec-7-en, Guanidine wie insbesondere 1,1,3,3-Tetramethylguanidin, Phenole, insbesondere Bisphenole, Phenol-Harze und Mannich-Basen wie insbesondere 2-(Dimethylaminomethyl)phenol, 2,4,6-Tris-(dimethylaminomethyl)phenol und Polymere aus Phenol, Formaldehyd und N,N-Dimethyl-1,3-propandiamin, Phosphite wie insbesondere Di- und Triphenylphosphite, sowie Mercaptogruppen aufweisende Verbindungen, wie sie bereits vorgängig genannt wurden.

Der erfindungsgemässe Härter kann weiterhin mindestens einen nicht einbaubaren Verdünner enthalten, wie insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykol-monomethylether, Diethylenglykol-monoethylether, Diethylenglykol-mono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, N-Methylpyrrolidon, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol und 8,11,14-Pentadecatrienylphenol (Cardanol, aus Cashewschalen-Öl, erhältlich beispielsweise als Cardolite NC-700 von Cardolite Corp., USA), styrolisiertes Phenol, Bisphenole, aromatische Kohlenwasserstoffharze, insbesondere Phenolgruppen-haltige Typen, Adipate, Sebacate, Phthalate, Benzoate, organische Phosphor- und Sulfonsäureester und Sulfonamide. Bevorzugt sind Benzylalkohol, Dodecylphenol, tert.Butylphenol, styrolisiertes Phenol und phenolgruppenhaltige aromatische Kohlenwasserstoffharze, insbesondere die Novares^{®}-Typen LS 500, LX 200, LA 300 und LA 700 (von Rütgers).

Bevorzugt enthält der Härter keinen oder nur einen geringen Gehalt an nicht einbaubaren Verdünnern, besonders bevorzugt weniger als 25 Gewichts-%, insbesondere weniger als 15 Gewichts-% und am meisten bevorzugt weniger als 5 Gewichts-%. Insbesondere werden dem Härter keine nicht einbaubaren Verdünner zugesetzt.

Bevorzugt weist der Härter eine Viskosität, gemessen bei 20°C, im Bereich von 150 bis 10'000 mPa.s, besonders bevorzugt im Bereich von 150 bis 6'000 mPa.s, und insbesondere im Bereich von 150 bis 4'000 mPa·s, auf.

Ein weiterer Gegenstand der Erfindung ist eine Epoxidharz-Zusammensetzung, enthaltend mindestens ein Epoxidharz und mindestens einen Härter wie vorgängig beschrieben.

Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.

Als Epoxidharz besonders geeignet sind sogenannte Polyepoxid-Flüssigharze, im folgenden als "Flüssigharz" bezeichnet. Diese weisen eine Glasübergangstemperatur unterhalb von 25°C auf, im Gegensatz zu den sogenannten Festharzen, welche eine Glasübergangstemperatur oberhalb von 25°C aufweisen und sich zu bei 25°C schüttfähigen Pulvern zerkleinern lassen.

In einer Ausführungsform handelt es sich beim Flüssigharz um ein aromatisches Polyepoxid. Dafür geeignet sind beispielsweise Flüssigharze der Formel (V), 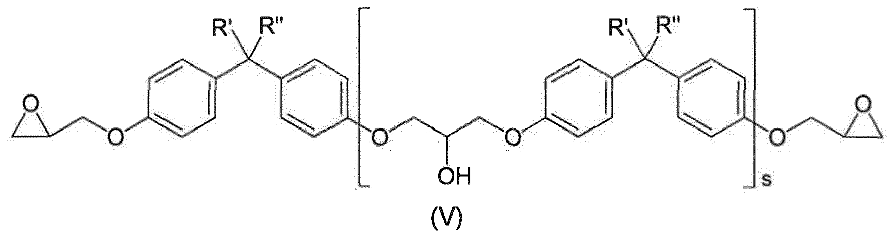 wobei R' und R" unabhängig voneinander jeweils für ein Wasserstoffatom oder für eine Methylgruppe stehen, und s im Mittel für einen Wert von 0 bis 1 steht. Bevorzugt sind solche Flüssigharze der Formel (V), bei denen der Index s im Mittel für einen Wert von kleiner als 0.2 steht.

Bei den Flüssigharzen der Formel (V) handelt es sich um Diglycidylether von Bisphenol-A, Bisphenol-F und Bisphenol-A/F, wobei A für Aceton und F für Formaldehyd steht, welche als Edukte zur Herstellung dieser Bisphenole dienen. Im Fall von Bisphenol-F können auch Stellungsisomere vorhanden sein, insbesondere abgeleitet von 2,4'- und 2,2'-Hydroxyphenylmethan.

Weitere geeignete aromatische Flüssigharze sind die Glycidylisierungsprodukte von
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenylethan, 1,4-Bis[2-(4-hydroxyphenyl)-2-propyl]benzol) (Bisphenol-P), 1,3-Bis-[2-(4-hydroxyphenyl)-2-propyl]benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxy-naphthalin, Tris-(4-hydroxyphenyl)methan, 1,1,2,2-Tetrakis-(4-hydroxyphenyl)ethan, Bis-(4-hydroxyphenyl)ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylenbis-(1-methylethyliden)]bisanilin (Bisanilin-P), 4,4'-[1,3-Phenylen-bis-(1-methylethyliden)]-bisanilin (Bisanilin-M).

Als Epoxidharz eignet sich auch ein aliphatisches oder cycloaliphatisches Polyepoxid, wie beispielsweise
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromo-neopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythrol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol-A-, -F- oder -A/F-Festharz, welches ähnlich aufgebaut ist wie die bereits genannten Flüssigharze der Formel (V), aber anstelle des Index s einen Wert von 2 bis 12 aufweist, und eine Glasübergangstemperatur oberhalb von 25°C aufweist.

Als Epoxidharz eignen sich schliesslich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz bevorzugt sind Flüssigharze auf der Basis eines Bisphenols, insbesondere auf der Basis von Bisphenol-A, Bisphenol-F- oder Bisphenol-A/F, wie sie kommerziell beispielsweise von Dow, Huntsman und Hexion erhältlich sind. Diese Flüssigharze weisen eine für Epoxidharze niedrige Viskosität und im ausgehärteten Zustand gute Eigenschaften als Beschichtung auf. Sie können gegebenenfalls in Kombination mit Bisphenol A-Festharz oder Bisphenol-F-Novolak-Epoxidharz vorhanden sein.

Das Epoxidharz kann einen Reaktivverdünner, insbesondere einen mindestens eine Epoxidgruppe aufweisenden Reaktivverdünner, enthalten. Als Reaktivverdünner geeignet sind beispielsweise die Glycidylether von ein- oder mehrwertigen Phenolen und aliphatischen oder cycloaliphatischen Alkoholen, wie insbesondere die bereits genannten Polyglycidylether von Di- oder Polyolen, sowie weiterhin insbesondere Phenylglycidylether, Kresylglycidylether, Benzylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C₈- bis C₁₀-Alkylglycidylether oder C₁₂- bis C₁₄-Alkylglycidylether. Die Zugabe eines Reaktivverdünners zum Epoxidharz bewirkt eine Reduktion der Viskosität, sowie - im ausgehärteten Zustand der Epoxidharz-Zusammensetzung - eine Reduktion der Glasübergangstemperatur und der mechanischen Werte.

Gegebenenfalls enthält die Epoxidharz-Zusammensetzung weitere Bestandteile, insbesondere in Epoxidharz-Zusammensetzungen üblicherweise eingesetzte Hilfs- und Zusatzstoffe, beispielsweise die Folgenden:
- Lösemittel, Verdünner, Filmbildehilfsmittel oder Extender, wie insbesondere die bereits genannten nicht einbaubaren Verdünner;
- Reaktivverdünner, insbesondere Epoxidgruppen aufweisende Reaktivverdünner, wie sie vorgängig erwähnt wurden, epoxidiertes Sojaöl oder Leinöl, Acetoacetatgruppen aufweisende Verbindungen, insbesondere acetoacetylierte Polyole, Butyrolakton, Carbonate, Aldehyde, sowie weiterhin Isocyanate und Reaktivgruppen-aufweisende Silikone;
- Polymere, wie beispielsweise Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere chlorsulfonierte Polyethylene und Fluorhaltige Polymere, Sulfonamid-modifizierte Melamine und gereinigte Montan-Wachse;
- anorganische und organische Füllstoffe, zum Beispiel gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Eisenglimmer, Dolomite, Wollastonite, Kaoline, Mica (Kalium-Aluminium-Silikat), Molekularsiebe, Aluminiumoxide, Aluminiumhydroxide, Magnesiumhydroxid, Kieselsäuren, Zemente, Gipse, Flugaschen, Russ, Graphit, Metall-Pulver wie Aluminium, Kupfer, Eisen, Zink, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid und Eisenoxide;
- die vorgenannten Beschleuniger;
- Rheologie-Modifizierer, wie insbesondere Verdickungsmittel, zum Beispiel Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Haftverbesserer, beispielsweise Organoalkoxysilane wie Aminosilane, Mercaptosilane, Epoxysilane, Vinylsilane, (Meth)acrylsilane, Isocyanatosilane, Carbamatosilane, Alkylsilane, S-(Alkylcarbonyl)-mercaptosilane und Aldiminosilane, sowie oligomere Formen dieser Silane, insbesondere 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Isocyanatopropyltrimethoxysilan, 3-Ureidopropyltrimethoxysilan, 3-Chloropropyltrimethoxysilan, Vinyltrimethoxysilan, oder die entsprechenden Organosilane mit Ethoxygruppen anstelle der Methoxygruppen;
- Stabilisatoren gegen Oxidation, Wärme, Licht und UV-Strahlung;
- flammhemmende Substanzen, insbesondere Verbindungen wie Aluminiumhydroxid (Al(OH)₃; auch ATH für "Aluminiumtrihydrat" genannt), Magnesiumhydroxid (Mg(OH)₂; auch MDH für "Magnesiumdihydrat" genannt), Ammoniumsulfat ((NH₄)₂SO₄), Borsäure (B(OH)₃), Zinkborat, Zinkphosphat, Melaminborat und Melamincyanurat; Phosphor-haltige Verbindungen wie Ammoniumphosphat ((NH₄)₃PO₄), Ammoniumpolyphosphat, Melaminphosphat, Melaminpyrophosphat, Triphenylphosphat, Diphenylkresylphosphat, Trikresylphosphat, Triethylphosphat, Tris-(2-ethylhexyl)phosphat, Trioctylphosphat, Mono-, Bis- und Tris-(isopropylphenyl)phosphat, Resorcinol-bis(diphenylphosphat), Resorcinol-diphosphat-Oligomer, Tetraphenyl-resorcinoldiphosphit, Ethylendiamin-diphosphat und Bisphenol-A-bis(diphenylphosphat); Halogen-haltige Verbindungen wie Chloroalkylphosphate, insbesondere Tris-(chloroethyl)phosphat, Tris-(chloropropyl)phosphat und Tris-(dichloroisopropyl)phosphat, polybromierte Diphenylether, insbesondere Decabromdiphenylether, polybromiertes Diphenyloxid, Tris-[3-Bromo-2,2-bis(bromomethyl)propyl]phosphat, Tetrabromo-Bisphenol-A, Bis-(2,3-dibromopropylether) von Bisphenol A, bromierte Epoxidharze, Ethylen-bis(tetrabromophthalimid), Ethylen-bis(dibromonorbornandicarboximid), 1,2-Bis-(tribromophenoxy)ethan, Tris-(2,3-dibromopropyl)isocyanurat, Tribromophenol, Hexabromocyclododecan, Bis-(hexachlorocyclopentadieno)cyclooctan und Chlorparaffine; sowie Kombinationen aus einer Halogen-haltigen Verbindung und Antimontrioxid (Sb₂O₃) oder Antimonpentoxid (Sb₂O₅);
- oberflächenaktive Substanzen, insbesondere Netzmittel, Verlaufsmittel, Entlüftungsmittel und Entschäumer;
- Biozide, wie beispielsweise Algizide, Fungizide oder das Pilzwachstum hemmende Substanzen.

Bevorzugt enthält die Epoxidharz-Zusammensetzung weitere Hilfs- und Zusatzstoffe, insbesondere Netzmittel, Verlaufsmittel, Entschäumer, Stabilisatoren, Pigmente und Katalysatoren, insbesondere Salicylsäure oder 2,4,6-Tris-(dimethylaminomethyl)phenol.

Bevorzugt enthält die Epoxidharz-Zusammensetzung keinen oder nur einen geringen Gehalt an nicht einbaubaren Verdünnern, besonders bevorzugt weniger als 10 Gewichts-%, insbesondere weniger als 5 Gewichts-%, am meisten bevorzugt weniger als 2 Gewichts-%.

In der Epoxidharz-Zusammensetzung liegt das Verhältnis der Anzahl von gegenüber Epoxidgruppen reaktiven Gruppen gegenüber der Anzahl Epoxidgruppen im Bereich von 0.5 bis 1.5, bevorzugt 0.7 bis 1.2.

Die in der Epoxidharz-Zusammensetzung vorhandenen Aminwasserstoffe und gegebenenfalls vorhandene weitere gegenüber Epoxidgruppen reaktive Gruppen reagieren mit den Epoxidgruppen unter deren Ringöffnung (Additionsreaktion). Als Ergebnis dieser Reaktionen polymerisiert die Zusammensetzung und härtet schliesslich aus. Dem Fachmann ist bekannt, dass primäre Aminogruppen gegenüber Epoxidgruppen difunktionell sind und eine primäre Aminogruppe somit als zwei gegenüber Epoxidgruppen reaktive Gruppen zählt.

Insbesondere ist die Epoxidharz-Zusammensetzung eine zweikomponentige Zusammensetzung, bestehend aus einer Harz-Komponente und einer Härter-Komponente, wobei das Epoxidharz Bestandteil der Harz-Komponente und der beschriebene Härter Bestandteil der Härter-Komponente ist.

Die Komponenten der zweikomponentigen Zusammensetzung werden jeweils in einem eigenen Gebinde gelagert. Weitere Bestandteile der zweikomponentigen Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Zur Anwendung der zweikomponentigen Epoxidharz-Zusammensetzung werden die Harz-Komponente und die Härter-Komponente kurz vor oder während der Applikation miteinander vermischt. Das Mischungsverhältnis zwischen den beiden Komponenten wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1.

Die Vermischung der beiden Komponenten erfolgt mittels eines geeigneten Verfahrens; sie kann kontinuierlich oder batchweise erfolgen. Falls das Vermischen vor der Applikation erfolgt, muss darauf geachtet werden, dass zwischen dem Vermischen der Komponenten und der Applikation nicht zu viel Zeit vergeht, da es dadurch zu Störungen, wie beispielsweise einem verlangsamten oder unvollständigen Aufbau der Haftung zum Substrat, kommen kann. Die Vermischung erfolgt insbesondere bei Umgebungstemperatur, welche typischerweise im Bereich von etwa 5 bis 50°C, bevorzugt bei etwa 10 bis 30°C, liegt.

Mit der Vermischung der beiden Komponenten beginnt die Aushärtung durch chemische Reaktion, wie vorgängig beschrieben. Die Aushärtung erfolgt insbesondere bei Umgebungstemperatur. Sie erstreckt sich typischerweise über einige Tage bis Wochen, bis sie unter den gegebenen Bedingungen weitgehend abgeschlossen ist. Die Dauer hängt unter anderem von der Temperatur, der Reaktivität der Bestandteile und deren Stöchiometrie sowie der Gegenwart von Beschleunigern ab.

Ein weiterer Gegenstand der Erfindung ist somit auch eine ausgehärtete Zusammensetzung erhalten aus der Aushärtung einer Epoxidharz-Zusammensetzung wie im vorliegenden Dokument beschrieben.

Die Applikation der Epoxidharz-Zusammensetzung erfolgt auf mindestens ein Substrat, wobei die Folgenden besonders geeignet sind:
- Glas, Glaskeramik, Beton, Mörtel, Backstein, Ziegel, Gips und Natursteine wie Granit oder Marmor;
- Metalle und Legierungen, wie Aluminium, Eisen, Stahl und Buntmetalle, sowie oberflächenveredelte Metalle und Legierungen, wie verzinkte oder verchromte Metalle;
- Leder, Textilien, Papier, Holz, mit Harzen, beispielsweise Phenol-, Melaminoder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- beschichtete Substrate, wie pulverbeschichtete Metalle oder Legierungen;
- Farben und Lacke, insbesondere Automobildecklacke.

Die Substrate können bei Bedarf vor dem Applizieren der Epoxidharz-Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten oder dergleichen, wobei dabei entstehende Stäube vorteilhaft abgesaugt werden, sowie weiterhin Behandeln mit Reinigern oder Lösemitteln oder das Aufbringen eines Haftvermittlers, einer Haftvermittlerlösung oder eines Primers.

Die beschriebene Epoxidharz-Zusammensetzung ist vorteilhaft verwendbar als Faserverbundwerkstoff (Composite), Vergussmasse, Dichtstoff, Klebstoff, Belag, Beschichtung, Anstrich, Lack, Versiegelung, Grundierung oder Primer. Insbesondere verwendbar ist sie als Vergussmasse, Dichtstoff und Klebstoff, wie beispielsweise als Elektrovergussmasse, Abdichtungsmasse, Karrosserieklebstoff, Sandwichelementklebstoff, Halbschalenklebstoff, beispielsweise für Rotorblätter von Windkraftanlagen, Brückenelementklebstoff oder Verankerungsklebstoff; sowie weiterhin als Belag, Beschichtung, Anstrich, Lack, Versiegelung, Grundierung und Primer für Bau- und Industrieanwendungen, wie insbesondere als Bodenbelag und Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden, wobei diese Beschichtungen die jeweiligen Substrate insbesondere gegen Korrosion, Abrasion, Feuchtigkeit, Wasser- und/oder Salzeinwirkung oder Chemikalien schützen; sowie weiterhin als Voranstrich, Haftanstrich, Korrosionsschutz-Primer oder zur Hydrophobierung von Oberflächen. Insbesondere geeignet ist die beschriebene Zusammensetzung auch als Beschichtung für sogenannt schweren Korrosionsschutz im und am Wasser, insbesondere auch im und am Meerwasser. Auf die vollständig oder teilweise ausgehärtete Epoxidharz-Zusammensetzung kann insbesondere bei ihrer Verwendung als Beschichtung, Belag oder Anstrich eine weitere Beschichtung, ein weiterer Belag, oder ein weiterer Anstrich appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung.

Besonders vorteilhaft verwendbar ist die beschriebene Epoxidharz-Zusammensetzung als Beschichtung. Als Beschichtung werden dabei flächig aufgebrachte Beläge aller Art verstanden, insbesondere auch Anstriche, Lacke, Versiegelungen, Grundierungen und Primer, wie vorgängig beschrieben. Insbesondere vorteilhaft verwendbar ist die beschriebene Epoxidharz-Zusammensetzung in Beschichtungen, welche besonders hohe Beständigkeiten aufweisen sollen, insbesondere gegenüber mechanischer Belastung, Feuchtigkeit, Wasser- und/- oder Salzeinwirkung, Fäkalien, Chemikalien oder Lebensmitteln.

Als Beschichtung wird die Epoxidharz-Zusammensetzung vorteilhaft in einem Verfahren zum Beschichten verwendet, wobei sie eine flüssige Konsistenz mit niedriger Viskosität und guten Verlaufseigenschaften aufweist und insbesondere als selbstverlaufende Beschichtung auf überwiegend ebene Flächen oder als Anstrich appliziert werden kann. Bevorzugt weist die Epoxidharz-Zusammensetzung bei dieser Applikation unmittelbar nach dem Vermischen der Harz- und der Härter-Komponente eine Viskosität, gemessen bei 20°C, im Bereich von 300 bis 4'000 mPa·s, bevorzugt im Bereich von 300 bis 3'000 mPa·s, insbesondere im Bereich von 300 bis 2'000 mPa·s, auf. Die vermischte Zusammensetzung wird innerhalb der Verarbeitungszeit flächig als dünner Film mit einer Schichtdicke von typischerweise etwa 50 µm bis etwa 5 mm auf ein Substrat appliziert, typischerweise bei Umgebungstemperatur. Die Applikation erfolgt beispielsweise durch Aufgiessen auf das zu beschichtende Substrat. Dabei wird die Zusammensetzung im flüssigen Zustand mit Hilfe beispielsweise eines Rakels oder einer Zahntraufel gleichmässig verteilt. Zusätzlich kann die verteilte Zusammensetzung mit einer Stachelwalze egalisiert und entlüftet werden. Die Applikation kann aber auch manuell durch Pinsel oder Roller oder als Spritzapplikation erfolgen, beispielsweise als Korrosionsschutzbeschichtung auf Stahl. Bei der Aushärtung entstehen typischerweise weitgehend klare, glänzende und nichtklebrige Filme von hoher Härte und guter Beständigkeit, welche eine gute Haftung zu verschiedensten Substraten aufweisen. Mit den beschriebenen Härtern sind Epoxidharz-Beschichtungen zugänglich, welche auch unter ungünstigen, das heisst das Blushing begünstigenden, Reaktionsbedingungen, insbesondere bei tiefen Aushärtungstemperaturen im Bereich von 5 bis 10°C und hoher Luftfeuchtigkeit, zu Filmen von hoher Qualität aushärten.

Ein weiterer Gegenstand der Erfindung ist ein Artikel enthaltend eine ausgehärtete Zusammensetzung, erhalten durch die Aushärtung der beschriebenen Epoxidharz-Zusammensetzung. Die ausgehärtete Zusammensetzung liegt dabei insbesondere in Form einer Beschichtung vor.

Die beschriebene Epoxidharz-Zusammensetzung zeichnet sich durch vorteilhafte Eigenschaften aus. Sie weist nur wenig Geruch auf und ist als flächige Beschichtung gut verarbeitbar. Sie härtet bei Umgebungstemperatur und insbesondere auch bei feucht-kalten Bedingungen überraschend schnell und ohne störende Blushing-Effekte aus und verfügt im ausgehärteten Zustand über eine sehr hohe Härte, sehr hohe Vernetzungsdichte und sehr hohe Beständigkeit gegenüber verschiedensten Angriffen. Ausgehärtete Filme sind typischerweise nicht trüb und weisen eine ebenmässig glänzende, kraterfreie und nichtklebrige Oberfläche auf. Besonders gut verarbeitbar sind Epoxidharz-Zusammensetzungen, welche neben dem Amin der Formel (I) ein weiteres Amin enthalten.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. Beschreibun der Messmethoden

Der **Amingehalt,** das heisst der totale Gehalt an Aminogruppen in den hergestellten Verbindungen, wurde titrimetrisch bestimmt (mit 0.1 N HClO₄ in Eisessig, gegen Kristallviolett) und ist stets angegeben in mmol N/g. **Infrarotspektren** (FT-IR) wurden als unverdünnte Filme auf einem mit horizontaler ATR-Messeinheit mit ZnSe-Kristall ausgestatteten FT-IR Gerät 1600 von Perkin-Elmer gemessen; die Absorptionsbanden sind in Wellenzahlen (cm⁻¹) angegeben (Messfenster: 4000-650 cm⁻¹).

Die **Viskosität** wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10-100 s⁻¹) gemessen.

### 2. verwendete Substanzen

| | |
|---|---|
| Lupasol^{®} FG: | Polyethylenimin, mittleres Molekulargewicht ca. 800 g/mol, Verhältnis prim./sek./tert.-Amin ca. 1/0.9/0.6 (von BASF) |
| Epomin^{®} SP-003: | Polyethylenimin, mittleres Molekulargewicht ca. 300 g/mol, Verhältnis prim./sek./tert.-Amin ca. 45/35/20 (von Nippon Shokubai) |
| Epomin^{®} SP-006: | Polyethylenimin, mittleres Molekulargewicht ca. 600 g/mol, Verhältnis prim./sek./tert.-Amin ca. 35/35/30 (von Nippon Shokubai) |
| Epomin^{®} SP-012: | Polyethylenimin, mittleres Molekulargewicht ca. 1200 g/mol, Verhältnis prim./sek./tert.-Amin ca. 35/35/30 (von Nippon Shokubai) |
| DB-MXDA: | N,N'-Dibenzyl-1,3-bis-(aminomethyl)benzol, hergestellt aus 21.2 g Benzaldehyd und 13.6 g 1,3-Bis-(aminomethyl)benzol gemäss der allgemeinen Herstellvorschrift für die reduktive Alkylierung, Amingehalt 6.41 mmol N/g |
| Gaskamine^{®} 240: | Styrolisiertes 1,3-Bis-(aminomethyl)benzol, NH-Equivalent = 103 g/Eq, Amingehalt 7.18 mmol N/g (von Mitsubishi Gas Chemical) |
| Jeffamine^{®} D-230: | Polypropylenglykol-Diamin, mittleres Molekulargewicht ca. 240 g/mol, Amingehalt ca. 8.29 mmol N/g (von Huntsman) |
| Araldite^{®} GY 250: | Bisphenol-A-Diglycidylether; Epoxy-Equivalent ca. 187.5 g/Eq (von Huntsman) |
| Araldite^{®} DY-E: | Monoglycidylether eines C₁₂- bis C₁₄-Alkohols; Epoxy-Equivalent ca. 290 g/Eq (von Huntsman) |
| Ancamine^{®} K 54: | 2,4,6-Tris-(dimethylaminomethyl)phenol (von Air Products) |

### 3. Herstellung von Härtern

### Allgemeine erstellvorschrift für die reduktive Alkylierung

In einem Rundkolben wurden ein Aldehyd oder eine Mischung von Aldehyden und ein Polyethylenimin unter Stickstoffatmosphäre in ausreichend Isopropanol gelöst. Die Lösung wurde während 30 Minuten bei Raumtemperatur gerührt und anschliessend bei einem Wasserstoff-Druck von 80 bar, einer Temperatur von 80 °C und einem Fluss von 3 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die Lösung im Vakuum bei 80 °C eingeengt.

**Härter *H1*:** Gemäss der allgemeinen Herstellvorschrift für die reduktive Alkylierung wurden 21.2 g Benzaldehyd und 20.0 g Lupasol^{®} FG umgesetzt. Erhalten wurde ein klares, leicht gelbliches Öl mit einer Viskosität von 9'300 mPa·s bei 20 °C und einem Amingehalt von 10.20 mmol N/g.
FT-IR: 3022, 2808, 1494, 1449, 1119, 1026, 727, 694

**Härter *H2*:** 76.2 Gewichtsteile des Härters aus Beispiel 1 wurden mit 39.6 Gewichtsteilen DB-MXDA vermischt. Erhalten wurde ein klares, leicht gelbliches Öl mit einer Viskosität von 1'230 mPa.s bei 20 °C.

**Härter *H3*:** Gemäss der allgemeinen Herstellvorschrift für die reduktive Alkylierung wurden 21.2 g Benzaldehyd und 20.0 g Epomin^{®} SP-003 umgesetzt. Erhalten wurde ein klares, leicht gelbliches Öl mit einer Viskosität von 1'300 mPa·s bei 20 °C und einem Amingehalt von 11.38 mmol N/g.
FT-IR: 3060, 3025, 2888, 2815, 1494, 1452, 1116, 1027, 727, 694

**Härter *H4:*** Gemäss der allgemeinen Herstellvorschrift für die reduktive Alkylierung wurden 17.7 g Benzaldehyd und 20.0 g Epomin^{®} SP-006 umgesetzt. Erhalten wurde ein klares, leicht gelbliches Öl mit einer Viskosität von 7'300 mPa·s bei 20 °C und einem Amingehalt von 9.99 mmol N/g. FT-IR:2883, 2807, 1494, 1452, 1357, 1337, 1119, 1027, 731, 696

**Härter *H5*:** Gemäss der allgemeinen Herstellvorschrift für die reduktive Alkylierung wurden 17.7 g Benzaldehyd und 20.0 g Epomin^{®} SP-012 umgesetzt. Erhalten wurde ein klares, leicht gelbliches Öl mit einer Viskosität von 24'700 mPa·s bei 20 °C und einem Amingehalt von 9.69 mmol N/g. FT-IR: 2934, 2885, 2809, 1494, 1452, 1358, 1338, 1116, 1027, 732, 696

**Härter *H6:*** Gemäss der allgemeinen Herstellvorschrift für die reduktive Alkylierung wurden 29.8 g 4-(Dimethylamino)benzaldehyd und 20.0 g Lupasol^{®} FG umgesetzt. Erhalten wurde ein leicht trübes, leicht gelbliches Öl mit einer Viskosität von 28'500 mPa·s bei 20 °C und einem Amingehalt von 10.11 mmol N/g.
FT-IR: 2883, 2805, 1614, 1521, 1444, 1344, 1224, 1162, 1128, 1059, 946, 804

**Härter *H7*:** Gemäss der allgemeinen Herstellvorschrift für die reduktive Alkylierung wurden 24.9 g 4-(Dimethylamino)benzaldehyd und 20.0 g Epomin^{®} SP-006 umgesetzt. Erhalten wurde ein leicht trübes, leicht gelbliches Öl mit einer Viskosität von 31'600 mPa·s bei 20 °C und einem Amingehalt von 10.36 mmol N/g.
FT-IR: 2884, 2806, 1614, 1521, 1444, 1344, 1225, 1163, 1128, 1059, 946, 804

**Härter *H8***: Gemäss der allgemeinen Herstellvorschrift für die reduktive Alkylierung wurden 24.4 g Salicylaldehyd und 20.0 g Lupasol^{®} FG umgesetzt. Erhalten wurde ein klares, gelbes, hochviskoses Öl mit einer Viskosität von 38'300 mPa·s bei 60 °C und einem Amingehalt von 11.69 mmol N/g.
FT-IR: 2929, 2816, 1589, 1454, 1254, 1102, 1035, 750

**Härter *H9*:** Gemäss der allgemeinen Herstellvorschrift für die reduktive Alkylierung wurde eine Mischung aus 19.1 g Benzaldehyd und 2.4 g Salicylaldehyd mit 20.0 g Lupasol^{®} FG umgesetzt. Erhalten wurde ein klares, gelbliches Öl mit einer Viskosität von 13'700 mPa·s bei 20 °C und einem Amingehalt von 9.93 mmol N/g.
FT-IR: 2808, 1494, 1451, 1254, 1026, 729, 695

**Härter *H10*:** Gemäss der allgemeinen Herstellvorschrift für die reduktive Alkylierung wurde eine Mischung aus 19.1 g Benzaldehyd und 2.1 g 2-Pyridincarbaldehyd mit 20.0 g Lupasol^{®} FG umgesetzt. Erhalten wurde ein klares, leicht gelbliches Öl mit einer Viskosität von 9'500 mPa·s bei 20 °C und einem Amingehalt von 10.78 mmol N/g.
FT-IR: 3025, 2931, 2884, 2808, 1494, 1452, 1118, 1054, 1027, 731, 696

**Härter *H11*:** Gemäss der allgemeinen Herstellvorschrift für die reduktive Alkylierung wurde eine Mischung aus 19.1 g Benzaldehyd und 3.0 g 3-Nitrobenzaldehyd mit 20.0 g Lupasol^{®} FG umgesetzt. Erhalten wurde ein klares, gelbliches Öl mit einer Viskosität von 16'100 mPa·s bei 20 °C und einem Amingehalt von 10.40 mmol N/g.
FT-IR: 3025, 2931, 2884, 2809, 1494, 1452, 1116, 1054, 1027, 731, 696

**Härter *H12*:** Gemäss der allgemeinen Herstellvorschrift für die reduktive Alkylierung wurden 49.8 g 2,2-Dimethyl-3-lauroyloxypropanal und 20.0 g Lupasol^{®} FG umgesetzt. Erhalten wurde ein klares, leicht gelbliches Öl mit einer Viskosität von 1'700 mPa·s bei 20 °C und einem Amingehalt von 5.61 mmol N/g.
FT-IR: 2950, 2887, 2847, 2801, 1455, 1116, 1101, 863, 754

**Härter *H13*:** Gemäss der allgemeinen Herstellvorschrift für die reduktive Alkylierung wurde eine Mischung aus 10.6 g Benzaldehyd, 4.9 g Salicylaldehyd und 17.0 g 2,2-Dimethyl-3-lauroyloxypropanal mit 20.0 g Lupasol^{®} FG umgesetzt. Erhalten wurde ein klares, gelbliches Öl mit einer Viskosität von 6'900 mPa·s bei 20 °C und einem Amingehalt von 7.43 mmol N/g.
FT-IR: 2918, 2811, 1730, 1452, 1252, 1112, 732, 696

**Härter *H14*:** Gemäss der allgemeinen Herstellvorschrift für die reduktive Alkylierung wurden 30.0 g 2,2-Dimethyl-3-(N-morpholino)-propanal und 20.0 g Lupasol^{®} FG umgesetzt. Erhalten wurde ein klares, leicht gelbliches Öl mit einer Viskosität von 18'000 mPa·s bei 20 °C und einem Amingehalt von .10.61 mmol N/g.
FT-IR: 3025, 2931, 2884, 2808, 1494, 1452, 1118, 1027, 731, 696

**Härter *H15*:** Gemäss der allgemeinen Herstellvorschrift für die reduktive Alkylierung wurde eine Mischung aus 8.5 g Benzaldehyd, 4.9 g Salicylaldehyd und 10.3 g 2-Ethylhexanal mit 20.0 g Lupasol^{®} FG umgesetzt. Erhalten wurde ein klares, gelbliches Öl mit einer Viskosität von 7'000 mPa·s bei 20 °C und einem Amingehalt von 10.24 mmol N/g.
FT-IR: 2952, 2922, 2852, 1627, 1463, 1422, 1112, 1057, 721

### 4. Herstellung von Epoxidharz-Zusammensetzungen

Für jedes Beispiel wurden die in der Tabelle 1 angegebenen Inhaltsstoffe in den angegebenen Mengen (in Gewichtsteilen) mittels eines Zentrifugalmischers (SpeedMixer™ DAC 150, FlackTek Inc.) vermischt. 10 Minuten nach dem Vermischen wurde jeweils die Viskosität bei 20 °C der Zusammensetzungen bestimmt ("Viskosität (10')"). Weiterhin wurde jeweils ein erster Film in einer Schichtdicke von 500 µm auf eine Glasplatte aufgezogen und dieser bei 23±1 °C und 50±5 % relativer Feuchtigkeit (= Normklima, im folgenden abgekürzt mit "NK") gelagert, beziehungsweise ausgehärtet. Nach 4 Wochen wurde der Aspekt der Filme beurteilt (in den Tabellen mit "Aspekt (NK)" bezeichnet). Als "schön" wurde ein Film bezeichnet, welcher klar war und eine glänzende und nichtklebrige Oberfläche ohne Struktur aufwies. Als "Struktur" wird dabei jegliche Art von Zeichnung oder Muster auf der Oberfläche bezeichnet. Weiterhin wurde die Königshärte (Pendelhärte nach König, gemessen nach DIN EN ISO 1522) der Filme nach 2 Tagen ("Königshärte (NK) (2d)") bzw. nach 4 Tagen ("Königshärte (NK) (4d)") bzw. nach 7 Tagen ("Königshärte (NK) (7d)") bzw. nach 4 Wochen ("Königshärte (NK) (4w)") bestimmt. Weiterhin wurde jeweils ein zweiter Film in einer Schichtdicke von 500 µm auf eine Glaplatte aufgezogen und dieser unmittelbar nach dem Applizieren während 7 Tagen bei 8 °C und 80 % relativer Feuchtigkeit und anschliessend während 3 Wochen im NK gelagert, beziehungsweise ausgehärtet. Anschliessend wurde der Aspekt dieser Filme beurteilt (in den Tabellen mit "Aspekt (8°/80%)" bezeichnet), auf die gleiche Weise wie für den Aspekt (NK) beschrieben. An den so ausgehärteten Filmen wurde wiederum die Königshärte bestimmt, jeweils nach 7 Tagen bei 8 °C und 80 % relativer Feuchtigkeit ("Königsh. (8°/80%) (7d kalt)"), dann nach weiteren 2 Tagen im NK ("Königsh. (8°/80%) (+2d NK)") bzw. 7 Tagen im NK ("Königsh. (8°/80%) (+7d NK)") bzw. 3 Wochen im NK ("Königsh. (8°/80%) (+3w NK)").

Die Resultate sind in der Tabelle 1 angegeben.

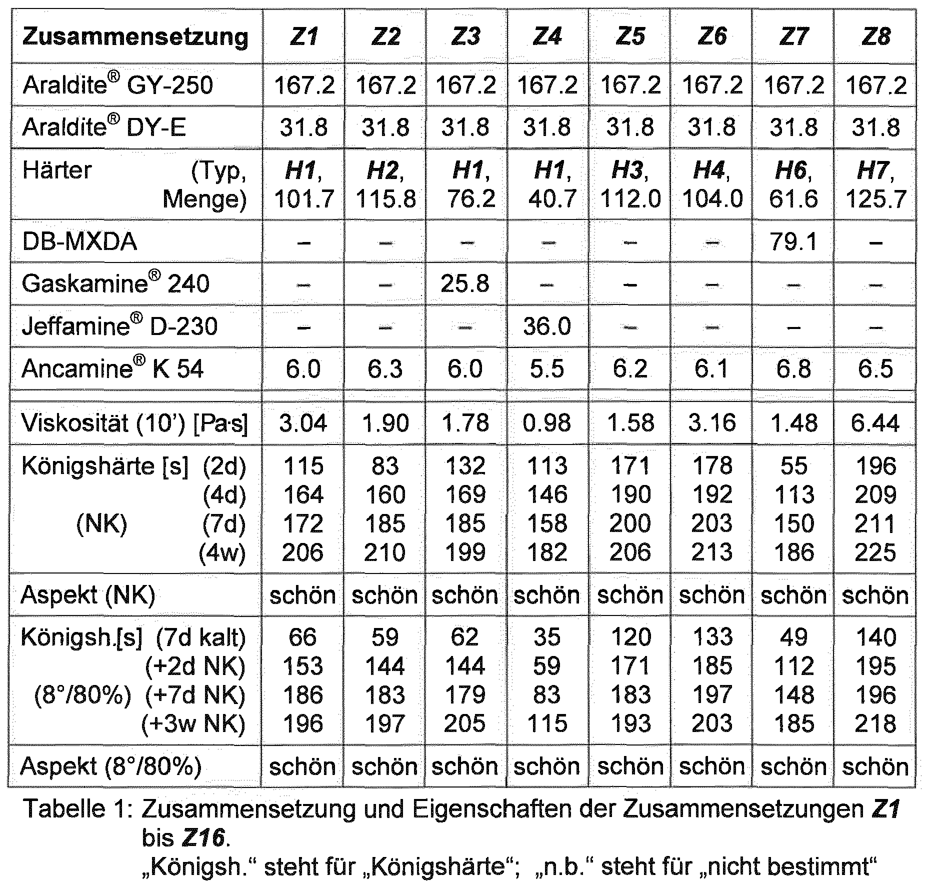

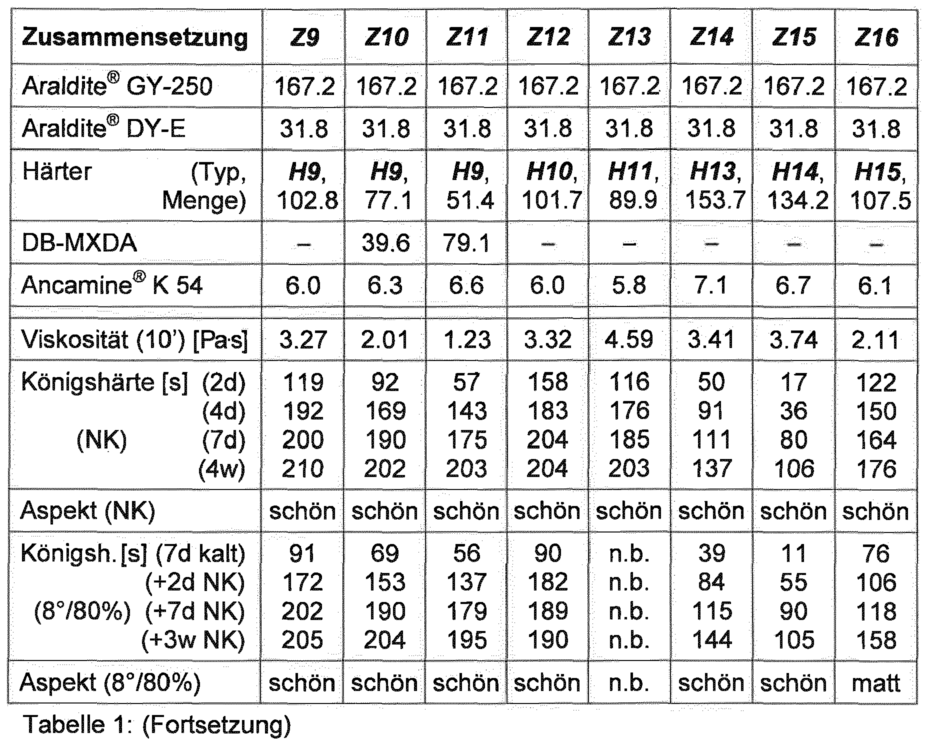

## Patentansprüche

1. Härter, geeignet zum Aushärten von Epoxidharzen, enthaltend mindestens ein Amin der Formel (I), 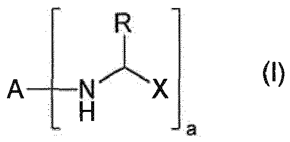 wobei
A für den Rest eines Polyethylenimins mit einem Molekulargewicht im Bereich von 300 bis 5'000 g/mol nach Entfernung von a primären aliphatischen Aminogruppen steht;
R für ein Wasserstoffatom oder eine Alkylgruppe mit 1 bis 12 C-Atomen steht;
a für eine ganze Zahl von 1 bis 50 steht; und
X für einen Kohlenwasserstoffrest mit 1 bis 20 C-Atomen, welcher gegebenenfalls Hydroxylgruppen, Mercaptogruppen, Ethergruppen, Estergruppen, Pyridinogruppen oder Aminogruppen aufweist, steht.

2. Härter gemäss Anspruch 1, **dadurch gekennzeichnet, dass** A für den Rest eines Polyethylenimins mit einem Molekulargewicht im Bereich von 300 bis 2'000 g/mol nach Entfernung von a primären aliphatischen Aminogruppen steht.

3. Härter gemäss einem der Ansprüche 1 oder 2, **dadurch gekennzeichnet, dass** R für ein Wasserstoffatom oder eine Methylgruppe steht.

4. Härter gemäss einem der Ansprüche 1 bis 3, **dadurch gekennzeichnet, dass** a für 1 bis 20 steht.

5. Härter gemäss einem der Ansprüche 1 bis 4, **dadurch gekennzeichnet, dass** das Amin der Formel (I) frei von primären Aminogruppen ist.

6. Härter gemäss einem der Ansprüche 1 bis 5, **dadurch gekennzeichnet, dass** X für einen Arylrest mit 6-12 C-Atomen steht.

7. Härter gemäss einem der Ansprüche 1 bis 5, **dadurch gekennzeichnet, dass** X für einen hydroxylsubstituierten Arylrest mit 6-12 C-Atomen steht.

8. Härter gemäss einem der Ansprüche 1 bis 5, **dadurch gekennzeichnet, dass** X für einen dialkylaminosubstituierten Arylrest mit 6-12 C-Atomen steht.

9. Härter gemäss einem der Ansprüche 1 bis 5, **dadurch gekennzeichnet, dass** X für einen Rest ausgewählt aus der Gruppe bestehend aus Phenyl, 2-Hydroxyphenyl, 3-Aminophenyl, 4-Dimethylaminophenyl, 2-Pyridinyl, 3-Pyridinyl, Methyl, Ethyl, 2-Propyl, 3-Heptyl, 1-Undecyl, 2,2-Dimethyl-3-(N-morpholino)propyl, 2,2-Dimethyl-3-hydroxypropyl und 2,2-Dimethyl-3-lauroyloxypropyl steht.

10. Härter gemäss einem der Ansprüche 1 bis 9, **dadurch gekennzeichnet, dass** er mindestens ein weiteres Amin mit mindestens zwei gegenüber Epoxidgruppen reaktiven Aminwasserstoffen enthält.

11. Verfahren zur Herstellung eines Härters gemäss einem der Ansprüche 1 bis 10, **dadurch gekennzeichnet, dass** das Amin der Formel (I) durch reduktive Alkylierung eines Polyethylenimins mit mindestens einer Carbonylverbindung der Formel (IV) und/oder (IV') erhalten wird, 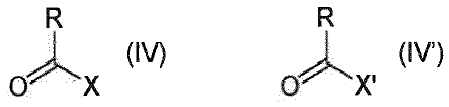 wobei
R für ein Wasserstoffatom oder eine Alkylgruppe mit 1 bis 12 C-Atomen steht;
X für einen Kohlenwasserstoffrest mit 1 bis 20 C-Atomen, welcher gegebenenfalls Hydroxylgruppen, Mercaptogruppen, Ethergruppen, Estergruppen, Pyridinogruppen oder Aminogruppen aufweist, steht; und X' für einen nitrosubstituierten Arylrest mit 6-12 C-Atomen steht.

12. Verwendung eines Härters gemäss einem der Ansprüche 1 bis 10 zum Aushärten von mindestens einem Epoxidharz.

13. Epoxidharz-Zusammensetzung enthaltend mindestens ein Epoxidharz und mindestens einen Härter gemäss einem der Ansprüche 1 bis 10.

14. Ausgehärtete Zusammensetzung erhalten aus der Aushärtung der Epoxidharz-Zusammensetzung gemäss Anspruch 13.

15. Artikel enthaltend eine ausgehärtete Zusammensetzung gemäss Anspruch 14.
